# EUROPÄISCHE PATENTSCHRIFT

(11) **EP 1 582 544 B1**
(45) Veröffentlichungstag und Bekanntmachung des Hinweises auf die Patenterteilung: **23.07.2008**
(21) Anmeldenummer: 05006176.1
(22) Anmeldetag: 22.03.2005
(51) Int. Cl.: C08G 18/48, C08G 18/76, C08G 18/79, C08G 18/72, C08G 18/12, B01D 63/02, A61L 27/34

(54) **Polyisocyanatprepolymere und deren Verwendung zum Verguss von Nierenfiltern**
Polyisocyanate prepolymers and their use for casting dialysis filters
Prépolymères de polyisocyanate et leurs utilisation pour préparer des filtres de dialyse par moulage

(30) Priorität: 01.04.2004 DE 102004016787
(43) Veröffentlichungstag der Anmeldung: 05.10.2005
(73) Patentinhaber: BASF SE, 67056 Ludwigshafen (DE)
(72) Erfinder: Bezard, Stephane, 85757 Karlsfeld (DE); Reese, Hans-Jürgen, 82140 Olching (DE); Pohl, Wolfgang, Dr., 80797 München (DE); Fritz, Ralf, Dr., 86926 Greifenberg (DE); Bartz, Thomas, Dr., 85254 Wiedenzhausen (DE); Leifheit, Holger, 80339 München (DE); Lukat, Gunther, 86899 Landsberg (DE)

(56) Entgegenhaltungen:
- EP-A- 0 538 673
- WO-A-01/02458
- WO-A-98/29466
- DE-A1- 3 238 173
- DE-A1- 10 126 453
- DE-A1- 10 225 942
- US-A- 4 774 937
- US-A- 5 052 380

## Beschreibung

Die Erfindung betrifft Dialysefilter, aufgebaut aus einem Bündel von Hohlfasern, die am Ende jeweils in eine kompakte Vergussmasse eingebettet sind, wobei als Vergussmasse ein kompaktes Polyurethan verwendet wird, erhältlich durch Umsetzung von a) Polyisocyanatprepolymeren, die erhältlich sind durch Umsetzen von Polyisocyanaten, insbesondere Methylendiphenyldiisocyanat (nachfolgend als MDI bezeichnet) (i) und gegebenenfalls Bis-[isocyanatodiphenylmethan]-carbodiimid (ii) mit einem Gemisch aus mindestens zwei Polyetherpolyolen (iii-a und iii-b) mit einem zahlenmittleren Molekulargewicht von mindestens 300 g/mol, wobei die mindestens zwei Polyetherpolyole durch Alkoxylierung eines difunktionellen Startermoleküls erhältlich sind und eine Differenz von mindestens 150 g/mol im zahlenmittleren Molekulargewicht aufweisen, und b) Polyolen.

Eine Reihe von Polyurethansysteme für den Verguss von Dialysefiltern sind bekannt. Sie bestehen im wesentlichen aus einer sogenannten Polyolkomponente, einem Gemisch hydroxyfunktioneller Verbindungen mit weiteren Zusatzstoffen insbesondere Katalysatoren, sowie einer sogenannten Isocyanatkomponente, einem Gemisch von Isocyanatendgruppen tragenden Verbindungen.

Je nach System sind die verschiedensten Formulierungen bekannt. So ist in dem EP-A-538 673 ein System beschrieben, dessen Polyolkomponente ein trifunktionelles Polyetherpolyol und oder Rizinusöl in Kombination mit einem kurzkettigen vernetzenden Polyetherpolyol enthält. Dieses polyolische Gemisch wird mit einer Isocyanatkomponente umgesetzt, die, als modifiziertes Diphenylmethandiisocyanat beschrieben, im wesentlichen durch weitere Prepolymerisierung eines schon vorliegenden Prepolymers gewonnen wird. In diesen Zusammenhang damit sind in EP-A-538 673 eine Reihe von Modifizierungsmöglichkeiten des Diphenylmethandiisocyanat beschrieben, die jedoch alle den Nachteil haben, dass sie bei definierten Isocyanatgehalten zu relativ hoch-viskosen Produkten führen. Damit haben die Polyurethansysteme, die in EP-A-538 673 für den Verguss von Dialysefiltern vorgeschlagen werden, den Nachteil, dass sie für den Verguss von Filtern mit hoher Faserzahl (d.h. mit Faserzahl von größer mehr als 12000 Fasern pro Filter, bevorzugt mehr als 14000 Fasern pro Filter) ungeeignet sind. Auch die in EP-A-393545, EP-A-413265 und EP-A-1088840 offenbarten Systeme weisen diese Nachteile auf.

Aufgabe der Erfindung war es daher, eine Formulierung für eine Isocyanatkomponente zu finden, die es ermöglicht, zusammen mit einer Polyolkomponente ein Polyurethansystem zu erzeugen, womit Dialysefilter mit hoher Faserzahl qualitätsgerecht zu vergossen werden können.

Die Aufgabe konnte unerwartet dadurch gelöst werden, dass ein besonderes Diolgemisch zur Herstellung des Polyisocyanatprepolymers verwendet wird. Bei den speziellen Diolen handelt es sich um Alkylenglykole, bevorzugt Propylenglykole, wobei das Diolgemisch ein zahlenmittleres Molekulargewicht mindest 300 g/mol aufweist und die Differenz zwischen dem zahlenmittleren Molekulargewicht der verwendeten Diole mindest 150 g/mol beträgt.

Gegenstand der Erfindung sind daher Dialysefilter, aufgebaut aus einem Bündel von Hohlfasern, die am Ende jeweils in eine kompakte Vergussmasse eingebettet sind, wobei als Vergussmasse ein kompaktes Polyurethan verwendet wird, erhältlich durch Umsetzung von
a) Polyisocyanatprepolymere, die erhältlich sind durch Umsetzen von
   i) Polyisocyanaten und
   ii) gegebenenfalls Bis-[isocyanatodiphenylmethan]-carbodiimid mit
   iii) einem Gemisch aus mindestens zwei Polyetherpolyolen (iii-a und iii-b) mit einem zahlenmittleren Molekulargewicht von mindestens 300 g/mol,
wobei die mindestens zwei Polyetherpolyole durch Alkoxylierung eines difunktionellen Startermoleküls erhältlich sind und eine Differenz von mindestens 150 g/mol im zahlenmittleren Molekulargewicht aufweisen, und Polyolen.

Als Polyisocyanate (i) kommen die üblichen aliphatischen, cycloaliphatischen und insbesondere aromatischen Di- und/oder Polyisocyanate zum Einsatz. Bevorzugt verwendet werden Diisocyanate, beispielsweise Toluylendiisocyanat (TDI), und insbesondere bevorzugt Diphenylmethandiisocyanat (nachfolgend als MDI bezeichnet). Sofern MDI verwendet wird, können alle 2-Kern-Isomere (2,4' und 4,4') verwendet werden. Bevorzugt wird 4,4'-MDI verwendet. Die Isocyanate können auch modifiziert sein, beispielsweise durch Einbau von Uretdion-, Carbamat-, Isocyanurat-, Carbodiimid-, Allophanat- und insbesondere Urethangruppen.

In einer optionalen, bevorzugten Ausführungsform wird der Umsetzung zum erfindungsgemäßen Polyisocyanatprepolymeren Bis-[isocyanatodiphenylmethan]-carbodümid (Komponente ii) zugeben. Bei Bis-[isocyanatodiphenylmethan]-carbodiimid handelt es sich um ein carbodiimidisiertes MDI. Bis-[isocyanatodiphenylmethan]-carbodiimid ist durch Umsetzung von MDI mit bekannten Katalysatoren, welche die Carbodiimidbildung fördern, erhältlich. Beispielsweise wird es kommerziell in einer 10 % Lösung in MDI unter dem Handelsnamen Lupranat^{®} MM103 vertrieben.

Bei der Komponente (iii), d.h. dem Gemisch aus mindestens zwei Polyetherpolyolen (iii-a und iii-b) mit einem zahlenmittleren Molekulargewicht von mindestens 300 g/mol handelt es sich um mindestens zwei Polyetherpolyole, die durch Alkoxylierung, bevorzugt durch Propoxylierung, eines difunktionellen Startermoleküls erhältlich sind. Die zwei Polyetherpolyole (iii-a und iii-b) weisen eine Differenz von mindestens 150 g/mol, bevorzugt von mehr als 200 g/mol, besonders bevorzugt von 250 bis 1000 g/mol, insbesondere von 300 bis 800 g/mol im zahlenmittleren Molekulargewicht auf.

Die Polyetherpolyole der Bestandteile iii-a und iii-b haben ein zahlenmittleres Molekulargewicht von mindestens 300 g/mol. Bevorzugt weisen sie ein zahlenmittleres Molekulargewicht von mindestens 350 g/mol, mehr bevorzugt von mehr als 400 bis 4000 g/mol, besonders bevorzugt von 420 bis 3000 g/mol, insbesondere von 430 bis 2000 g/mol auf.

Die Herstellung der Polyetherpolyole iii-a und iii-b erfolgt im allgemeinen wie nachstehend bei der Herstellung des erfindungsgemäßen Polyurethans unter der Polyolkomponente (b) beschrieben. Wichtig ist jedoch, dass bei der Herstellung der Polyetherpolyole der Bestandteile iii-a und iii-b die Alkoxylierung auf Basis von difunktionellen Startermolekülen erfolgt. Als Startermoleküle kommen beispielsweise organische Dicarbonsäuren, Diamine, Alkanolamine und/oder zweiwertige Alkohole in Betracht. Bevorzugt werden Diole als Startermoleküle verwendet. Beispiele hierfür sind Ethandiol, Propandiol-1,2 und -1,3, Diethylenglykol, Dipropylenglykol und/oder Butandiol-1,4.

In einer bevorzugten Ausführungsform handelt es sich bei den Bestandteil (iii-a) um ein Polypropylenglykol mit einem zahlenmittleren Molekulargewicht von 750 bis 1500 g/mol, bevorzugt von 800 bis 1200 g/mol und bei den Bestandteil (iii-b) um ein Polypropylenglykol mit einem zahlenmittleren Molekulargewicht von 300 bis 600 g/mol, bevorzugt von 350 bis 550 g/mol.

Im allgemeinen sind die erfindungsgemäßen Polyisocyanatprepolymere erhältlich, indem Polyisocyanate (i) und optional Bis-[isocyanatodiphenylmethan]-carbodiimid (ii) mit dem Gemisch aus den mindestens zwei Polyetherpolyolen (iii-a und iii-b) zum erfindungsgemäßen Prepolymer umgesetzt werden. Die Umsetzung erfolgt im allgemeinen bei Temperaturen von 30 bis 100°C, bevorzugt von 70 bis 90°C.

Da es sich bei den erfindungsgemäßen Prepolymeren um Polyisocyanatprepolymere handelt, ist bei der Umsetzung das Verhältnis von Isocyanatgruppen der Komponenten (i) und gegebenenfalls (ii) zu Gruppen mit gegenüber Isocyanaten reaktiven Wasserstoffatomen der Komponente (iii) so zu wählen, dass ein Überschuss an Isocyanatgruppen vorliegt. In einer bevorzugten Ausführungsform wird das Verhältnis der Komponenten (iii) zu (i) und gegebenenfalls (ii) so gewählt, dass der NCO-Gehalt des Prepolymeren 5 bis 28 Gew.-%, vorzugsweise 10 bis 26 Gew.-%, besonders bevorzugt 15 bis 25 Gew.-% beträgt. Um Nebenreaktionen durch Luftsauerstoff auszuschließen, kann die Umsetzung unter Inertgas, vorzugsweise Stickstoff, durchgeführt werden.

In einer weiteren bevorzugten Ausführungsform werden die Komponenten (i) bis (iii) so gewählt, dass der Umsetzung
40 Gew.-% bis 70 Gew.-% an Bestandteil (i),
0,05 Gew.-% bis 5 Gew.-% an Bestandteil (ii) und
30 Gew.-% bis 60 Gew.-% an Bestandteil (iii),
bezogen auf das Gesamtgewicht der Komponenten (i), (ii) und (iii), zugegeben werden.

Ferner ist es bevorzugt, dass das Gewichtsverhältnis der Bestanteile (i) zu (ii) zu (iii-a) zu (iii-b) Werte von 180 ± 20 zu 1 ± 0,8 zu 50 ± 10 zu 20 ± 5 beträgt.

In einer weiteren bevorzugten Ausführungsform werden Menge und Beschaffenheit der Bestandteile (i) bis (iii) so gewählt, dass das erfindungsgemäße Polyisocyanatprepolymer eine Viskosität von weniger als 1500 mPas, bevorzugt von 200 bis 1200 mPas, mehr bevorzugt von 250 bis 800 mPas, besonders bevorzugt von 300 bis 600 mPas, gemessen bei 25 °C nach DIN 53019 aufweist.

Gegenstand der Erfindung ist neben dem erfindungsgemäßen Polyisocyanatprepolymer auch ein Verfahren zu dessen Herstellung, umfassend die Umsetzung von i) Polyisocyanaten und
ii) gegebenenfalls Bis-[isocyanatodiphenylmethan]-carbodümid mit
iii) einem Gemisch aus mindestens zwei Polyetherpolyolen (iii-a und iii-b) mit einem zahlenmittleren Molekulargewicht von mindestens 300 g/mol,
wobei die mindestens zwei Polyetherpolyole durch Alkoxylierung eines difunktionellen Startermoleküls erhältlich sind und eine Differenz von mindestens 150 g/mol im zahlenmittleren Molekulargewicht aufweisen.

Die vorstehend für das erfindungsgemäße Polyisocyanatprepolymer beschriebenen bevorzugten Ausführungsformen sind auch für das erfindungsgemäße Verfahren anwendbar.

Das erfindungsgemäße Polyisocyanatprepolymer wird zur Herstellung von Polyurethanen verwendet.

Gegenstand der Erfindung ist somit ein Polyurethan, erhältlich durch Umsetzung von
a) dem erfindungsgemäßen Polyisocyanatprepolymer mit
b) Polyolen,
   gegebenenfalls in Gegenwart von
c) Katalysatoren und/oder
d) Hilfs- und Zusatzstoffen.

Die erfindungsgemäßen Polyisocyanatprepolymere sind vorstehend beschrieben. Als Polyole (b) kommen üblicherweise Polyetheralkohole und/oder Polyesteralkohole zum Einsatz.

Falls Polyesteralkohole eingesetzt werden, dann werden diese üblicherweise durch Kondensation von mehrfunktionellen Alkoholen, mit 2 bis 12 Kohlenstoffatomen, vorzugsweise 2 bis 6 Kohlenstoffatomen, mit mehrfunktionellen Carbonsäuren mit 2 bis 12 Kohlenstoffatomen, beispielsweise Bernsteinsäure, Glutarsäure, Adipinsäure, Korksäure, Azelainsäure, Sebacinsäure, Decandicarbonsäure, Maleinsäure, Fumarsäure und vorzugsweise Phthalsäure, Isophthalsäure, Terephthalsäure und die isomeren Naphthalindicarbonsäuren, hergestellt.

Falls Polyetheralkohole eingesetzt werden, was bevorzugt ist, so werden diese im allgemeinen nach bekannten Verfahren, beispielsweise durch anionische Polymerisation mit Alkalihydroxiden, als Katalysatoren und unter Zusatz eines Startermoleküls mehrere reaktive Wasserstoffatome gebunden enthält, aus einem oder mehreren Alkylenoxiden, ausgewählt aus Propylenoxid (PO) und Ethylenoxid (EO), hergestellt.

Als Polyetherole (b) können weiterhin sogenannte niedrig ungesättigte Polyetherole verwendet werden. Unter niedrig ungesättigten Polyolen werden im Rahmen dieser Erfindung insbesondere Polyetheralkohole mit einem Gehalt an ungesättigten Verbindungen von kleiner als 0,02 meq/g, bevorzugt kleiner als 0,01 meq/g, verstanden. Derartige Polyetheralkohole werden durch Anlagerung von Ethylenoxid und/oder Propylenoxid und Mischungen daraus, an mindestens difunktionelle Alkohole in Gegenwart von sogenannten Doppelmetallcyanidkatalysatoren hergestellt.

Die Alkylenoxide können einzeln, alternierend nacheinander oder als Mischungen verwendet werden. Der Einsatz eines EO/PO-Gemisches führt zu einem Polyetherpolyol mit statistischer PO/EO-Einheiten-Verteilung. Es ist möglich, zunächst ein PO/EO-Gemisch einzusetzen und dann vor Abbruch der Polymerisation nur noch PO oder EO zu verwenden, dann erhält man ein Polyetherpolyol mit PO- bzw. EO-Endcap. Bevorzugt wird jedoch ausschließlich Propylenoxid verwendet.

Als Startermoleküle kommen beispielsweise in Betracht: Wasser, organische Dicarbonsäuren, wie z.B. Bernsteinsäure, Adipinsäure, Phthalsäure und Terephthalsäure, aliphatische und aromatische Diamine mit 1 bis 4 Kohlenstoffatomen im Alkylrest, wie z.B. gegebenenfalls mono- und dialkylsubstituiertes Ethylendiamin, Diethylentriamin, Triethylentetramin, 1, Alkanolamine, wie z.B. Ethanolamin, N-Methyl- und N-Ethylethanolamin, Dialkanolamine, wie z.B. Diethanolamin, Trialkanolamine wie z.B. Triethanolamin, zwei-, dreiwertige oder vierwertige Alkohole, wie Ethandiol, Propandiol-1,2 und -1,3, Diethylenglykol, Dipropylenglykol, Butandiol-1,4, Hexandiol-1,6, Glycerin und/oder Pentaerythrit.

Im allgemeinen weisen die eingesetzten Polyetherpolyole eine durchschnittliche Funktionalität von 2 bis 6, bevorzugt von größer als 3 bis 5, auf. Unter Funktionalität ist hierbei die "theoretische OH-Funktionalität" zu verstehen, die aus der Funktionalität der verwendeten Startermoleküle ergibt.

Im allgemeinen besitzt das eingesetzte Polyolgemisch (b) ein zahlenmittleres Molekulargewicht von 400 bis 6000 g/mol, bevorzugt von 500 bis 2000 g/mol, besonders bevorzugt von 600 bis 1500 g/mol.
Die Polyolkomponente (b) kann in einer möglichen Ausführungsform ferner Kettenverlängerungsmittel enthalten. Unter Kettenverlängerungsmittel versteht man im allgemeinen verzweigte oder unverzweigte 2-wertige Alkohole oder Amine, mit einem Molekulargewicht von weniger als 300 g/mol, insbesondere von 60 bis 250 g/mol. Beispiele hierfür sind Ethylenglykol, 1,4-Butandiol, 1,3-Propandiol, Diethylenglykol oder Dipropylenglykol. Kettenverlängerungsmittel werden im allgemeinen in einer Menge von 1 bis 10 Gew.-%, bezogen auf das Gesamtgewicht der Komponente (b), verwendet.

Ebenfalls kann die Komponente (b) Vernetzungsmittel enthalten. Unter Vernetzungsmittel versteht man im allgemeinen verzweigte oder unverzweigte 3- oder höherwertige Alkohole oder Amine, mit einem Molekulargewicht von weniger als 300 g/mol, insbesondere von 60 bis 250 g/mol. Beispiele hierfür sind Triethanolamin oder Pentaerythrit. Vernetzungsmittel werden im allgemeinen in einer Menge von 0,1 bis 5 Gew.-%, bezogen auf das Gesamtgewicht der Komponente (b), verwendet.

Die Umsetzung der Komponenten (a) und (b) erfolgt in einer optionalen bevorzugten Ausführungsform in Gegenwart eines Katalysators (c). Als Katalysatoren werden vorzugsweise tertiäre Amine, Zinn-Katalysatoren oder Alkalisalze verwendet. Die Katalysatoren werden üblicherweise in einer Menge von 0,01 bis 2 Gew.-%, bezogen auf das Gesamtgewicht der Komponenten (a) und (b) verwendet.

Die Umsetzung der Komponenten (a) und (b) erfolgt gegebenenfalls in Anwesenheit von (d) Hilfs- und/oder Zusatzstoffen, wie z.B. Zellreglern, Trennmitteln, Pigmenten, Flammschutzmittel, Verstärkungsstoffen wie Glasfasern, oberflächenaktiven Verbindungen und/oder Stabilisatoren gegen oxidativen, thermischen, hydrolytischen oder mikrobiellen Abbau oder Alterung.

Die Umsetzung der Komponenten (a) und (b) sowie gegebenenfalls (c) und (d) erfolgt bevorzugt in Abwesenheit von Treibmittel, so dass es sich bei dem erfindungsgemäßen Polyurethan um ein kompakte Polyurethan handelt.

Unter kompaktem Polyurethanen werden im Rahmen dieser Erfindung Polyisocyanat-Polyadditionsprodukte verstanden, die ohne Zusatz von Treibmitteln hergestellt wurden. Gegebenenfalls können die verwendeten Polyole (b) jedoch geringe Anteile an Restwasser enthalten. Bevorzugt ist der Restwassergehalt unter 1 Gew.-%, mehr bevorzugt unter 0,3 Gew.-%, besonders bevorzugt unter 0,05 Gew.-%, bezogen auf das Gesamtgewicht der eingesetzten Komponente (b).

Die erfindungsgemäßen kompakten Polyurethane weisen im allgemeinen eine Dichte von 0,8 g/l bis 1,3 g/l, bevorzugt von 0,9 g/l bis 1,1 g/l. auf.

Ferner werden bevorzugt die Komponenten (a) bis (d) so gewählt, dass die resultierenden Polyurethane heißdampfsterilisierbar und nicht zytotoxisch sind. Dies wird im wesentlichen dadurch bewirkt, dass alle eingesetzten Komponenten (a) bis (d) so aufgebaut sind, dass sie entweder in das Polyurethan-Polymergitter eingebaut werden oder aus dem Polymer nicht mehr migrieren können bzw. das feste Polymere so hydrolysestabil ist, dass keine niedermolekularen Abbauprodukte (die zytotoxisch sein können) entstehen können.

Im allgemeinen wird die Komponente (a) als Isocyanatkomponente und die Komponente (b), gegebenenfalls im Gemisch mit Katalysatoren (c) und Zusatzstoffen (d) als Polyolkomponente bezeichnet.

Gegenstand der Erfindung ist ferner ein Verfahren zur Herstellung des erfindungsgemäßen Polyurethanes durch Umsetzung von
a) den erfindungsgemäßen Polyisocyanatprepolymeren mit
b) Polyolen.

Die oben beschriebenen bevorzugten Ausführungsformen für das erfindungsgemäße Polyurethan beziehen sich ebenso auf das erfindungsgemäße Verfahren.

Zur Herstellung der erfindungsgemäßen Polyurethane werden im allgemeinen die Komponenten (a) und (b) in solchen Mengen zur Umsetzung gebracht, dass das Äquivalenzverhältnis von NCO-Gruppen zur Summe der reaktiven Wasserstoffatome 1:0,8 bis 1:1,25, vorzugsweise 1:0,9 bis 1:1,15 beträgt. Ein Verhältnis von 1:1 entspricht hierbei einem NCO-Index von 100.

Die Ausgangskomponenten werden üblicherweise bei einer Temperatur von 0°C bis 100°C, bevorzugt 15 bis 60°C gemischt und zur Reaktion gebracht. Die Vermischung kann mit den üblichen PUR-Verarbeitungsmaschinen erfolgen. In einer bevorzugten Ausführungsform erfolgt die Vermischung durch Niederdruckmaschinen oder Hochdruckmaschinen.

Die erfindungsgemäßen Polyisocyanatprepolymere und die erfindungsgemäßen Polyurethane werden zur Herstellung zum Verguss von Dialysefilter, d.h. zur Herstellung von Dialysefiltervergussmassen verwendet.

Gegenstand der Erfindung ist somit ferner ein Dialysefilter, aufgebaut aus einem Bündel von Hohlfasern, die am Ende jeweils in eine kompakte Vergussmasse eingebettet sind, wobei als Vergussmasse ein kompaktes Polyurethan verwendet wird, erhältlich durch Umsetzung von
a) erfindungsgemäßen Polyisocyanatprepolymeren mit
b) Polyolen,
   gegebenenfalls in Gegenwart von
c) Katalysatoren und/oder
d) Hilfs- und Zusatzstoffen.

Das Bündel von Hohlfasern wird an jedem der beiden Enden in die Polyurethanvergussmasse eingebettet. Durch Schneiden der Vergussmasse senkrecht zur Hohlfaserbündelachse erhält man eine Schnittstelle, die "Poren" aufweist, wobei die Poren durch den Innenraum der Hohlfasern gebildet werden.

Das in die Polyurethanvergussmasse eingebettet Hohlfaserbündel stellt den Filtereinsatz des Dialysefilters dar. Durch Anbringen eines geeigneten Filtermantels um den Dialysefiltereinsatz kann nun durch die Poren die bei der Dialyse zu reinigende Flüssigkeit geleitet werden. Gleichzeitig wird durch den Filtermantel gewährleistet, dass die Reinigungsflüssigkeit im Gegenstrom zur zu reinigenden Flüssigkeit geleitet werden kann.

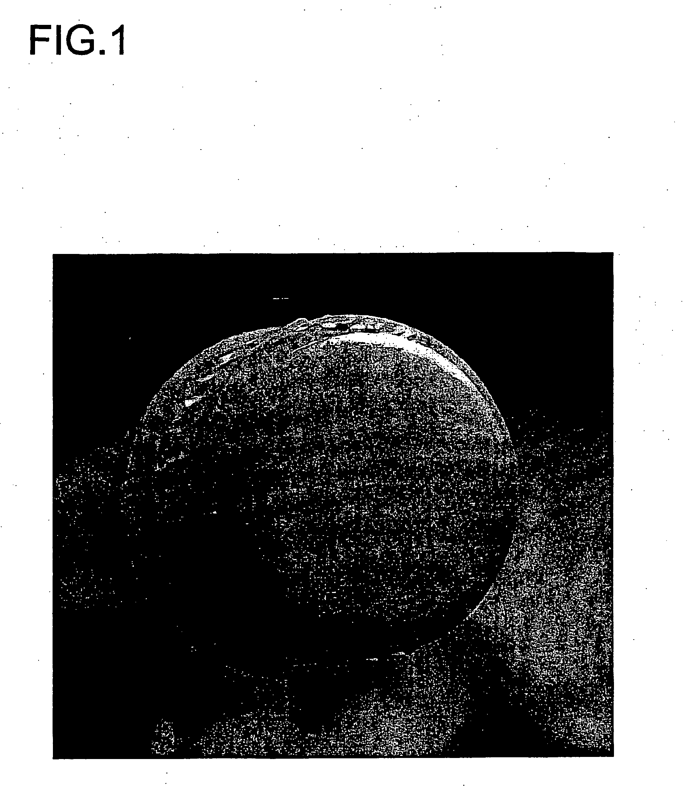

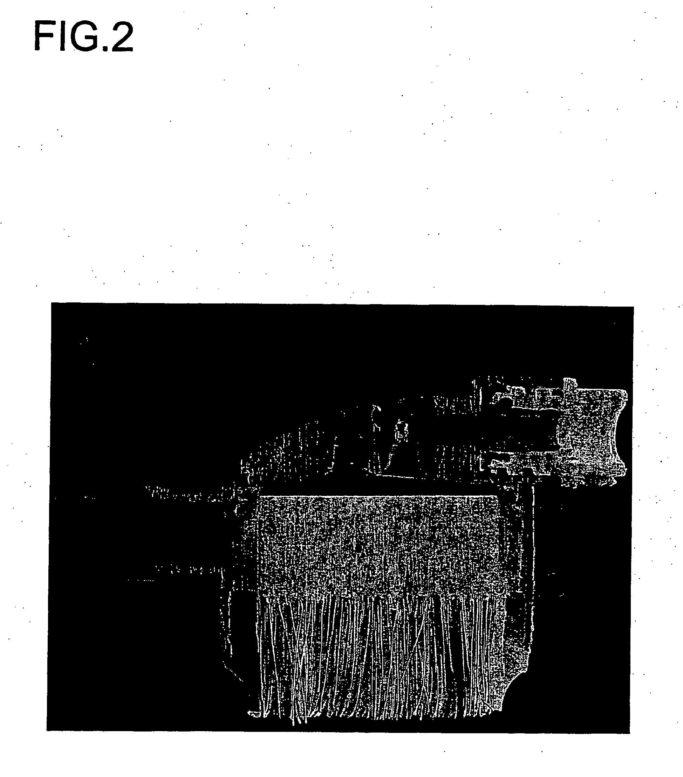

Der Aufbau eines erfindungsgemäßenr Dialysefilters wird in den Figuren 1 und 2 veranschaulicht. In Figur 1 zeigt eine Filtereinsatz, aufgebaut aus dem Bündel von Hohlfasern, das in die Polyurethanvergussmasse eingebettet ist. Figur 2 zeigt einen geeigneten Filtermantel, der um die eingebetteten Hohlfasern angebracht wird, damit Reinigungsflüssigkeit und zu reinigende Flüssigkeit im Gegenstrom fließen können.

Der erfindungsgemäße Dialysefilter enthält im allgemeinen mehr als 12000, bevorzugt von 14000 bis 25000, besonders bevorzugt von 15000 bis 20000 Hohlfasem. Hierbei handelt es sich im allgemeinen um aus dem Stand der Technik bekannte Hohlfasern, beispielsweise um Cuprophan-, Polysulfon-, Polycarbonat- oder Cellulosefasern.

Die Erfindung soll durch nachfolgende Beispiele veranschaulicht werden.

### 1. Ausführungsbeispiel

### 1a. Herstellung des erfindungsgemäßen Polyisocyanatprepolymers

In einem Prepolymerreaktor mit Heiz- und Kühlvorrichtung wurden 67,5 kg 4,4'-Diphenyl-methandüsocyanat (Schmelzpunkt ca. 42°C) im flüssigen Zustand eingefüllt.
Dazu wurden 4,0 kg carbodiimidmodifiziertes 4,4'-Diphenylmethandiisocyanat (Carbodiimidgehalt ca.10%) dosiert. Diesem Gemisch wurden unter Rühren 28,5 kg eines Polypropylenglykolgemisches, aus 20,0 kg eines Polypropylenglykols Molekulargewicht 1000 g/mol und 8,5 kg eines Polypropylenglykols Molekulargewicht 450 g/mol, zugesetzt.
Die Prepolymerreaktion wurde durch entsprechende Temperaturführung des Reaktors so gestaltet, dass die Prepolymerisierung bei einer Temperatur von ca. 80°C durchgeführt und dabei innerhalb eines Zeitraumes von ca. 60 bis 90 Minuten (min) weitestgehend abgeschlossen ist. Das nach Synthese und Abkühlung aus dem Reaktor abgelassene Prepolymer hatte folgende Eigenschaften:

| | |
|---|---|
| NCO-Gehalt | 20,6 Gew.-% |
| Viskosität (25°C) | 350 mPas, gemessen nach DIN 53 019 |

### 1b. Polyurethansystem zum Dialyseverguss unter Verwendung des erfindungsgemäßen Polyisocyanatprepolymers

Aus 75 kg eines Polyetherpolyols auf Basis Trimethylolpropan/Propylenoxyd mit einem Molekulargewicht von 1000 g/mol, 25 kg eines Polyetherpolyols auf Basis Saccharose, Pentandiol, Diethylenglykol / Propylenoxyd mit einem mittleren Molekulargewicht von 550 g/mol sowie 75 g Dioktyl-Zinn-bis(2-ethylhexylthioglykolat) wurde in einem entsprechenden Mischbehälter eine Polyolkomponente hergestellt.
Dazu wurde das unter Punkt 1 a beschriebene Polyisocyanatprepolymer als Isocyanatkomponente verwendet. Das neue Polyurethansystem wurde im Mischungsverhältnis Polyol- zu Isocyanatkomponente von 100 zu 85 Gew.-Teile verarbeitet.

### 1 c. Dialyseverguss (unter Verwendung von 15000 Fasern pro Filter)

Das Polyurethansystem von Punkt 1b) wurde in entsprechende Behälter einer Polyurethan-verarbeitungsmaschine (Dosieranlage MD2000 der Firma Villiger Polyurethan Technologie AG Trübach/Schweiz) gefüllt und die Maschine auf das gewünschte Mischungsverhältnis eingestellt. Der Verguss der Dialysefilter erfolgt nach bekannter Technologie, wobei Filter mit der erhöhten Faserzahl von 15000 Fasern pro Filter verwendet wurden. Nach dem Verguss und der Aushärtung wurden zur Qualitätskontrolle des Vergusses die vergossenen Faserbündel durchtrennt. Es ergab sich ein qualitätsgerechter Verguss, da alle Fasern von der Polyurethanmasse umschlossen waren.

### 2. Vergleichsbeispiel (nach EP-A-0 538 673)

### 2a. Herstellung des Polyisocyanatprepolymers nach EP-A-538673

In einem Prepolymerreaktor mit Heiz- und Kühlvorrichtung wurden 87 kg 4,4'-Diphenyl-methandüsocyanat (Schmelzpunkt ca. 42°C) im flüssigen Zustand eingefüllt. Dazu wurde in langsamer Dosierfolge ein Gemisch aus 8 kg Dipropylenglykol und 5 kg eines Polyoxypropylenglykols mit einer Hydroxylzahl von 250 mgKOH/g zugegeben. Die Reaktion wurde durch entsprechende Temperaturregelung auf etwa 80°C ca. 60 min. gehalten. Nach der Umsetzung wurden in einer zweiten Prepolymerisierungsstufe dem Reaktionsgemisch weitere 6,3 kg Rizinusöl zugesetzt und unter Rühren zur Reaktion gebracht. Das nach Synthese und Abkühlung aus dem Reaktor abgelassene Prepolymer hat folgende Eigenschaften bei gleichem lsocyanatgehalt:

| | |
|---|---|
| NCO-Gehalt | 20,6 Gew.% |
| Viskosität (25°C) | 1870 mPas, gemessen nach DIN 53 019 |

### 2b. Bekanntes Polyurethansystem zum Dialyseverguß nach EP-A-538673

Aus 94 kg Rizinusöl, 6 kg eines Polyetherpolyols auf Basis Trimethylolpropan/Propylen-oxyd mit einem mittleren Molekulargewicht von 178 g/mol sowie 60 g Dioktyl-Zinn-bis(2-ethylhexylthioglykolat) wurde in einem entsprechenden Mischbehälter eine Polyolkompo-nente hergestellt.
Dazu wurde das unter Punkt 2a beschriebene Polyisocyanatprepolymer als Isocyanatkomponente verwendet. Das neue Polyurethansystem wurde im Mischungsverhältnis Polyol- zu Isocyanatkomponente von 100 zu 85 Gew.-Teilen verarbeitet.

### 2c. Dialyseverguss (unter Verwendung von 15000 Fasern pro Filter)

Das Polyurethansystem von Punkt 2b wurde in die entsprechenden Behälter einer Polyurethan-verarbeitungsmaschine (Dosieranlage MD2000 der Firma Villiger Polyurethan Technologie AG Trübach/Schweiz) gefüllt und die Maschine auf das gewünschte Mischungsverhältnis eingestellt. Der Verguss der Dialysefilter erfolgte nach bekannter Technologie, wobei Filter mit der erhöhten Faserzahl von 15000 Fasern pro Filter verwendet wurden. Nach dem Verguss und der Aushärtung wurden zur Qualitätskontrolle des Vergusses die vergossenen Faserbündel durchtrennt. Es ergabt sich ein gravierender Vergussfehler, da die Fasern im Innern des Faserbündels nicht von der Polyurethanmasse umschlossen waren.

## Patentansprüche

1. Dialysefilter, aufgebaut aus einem Bündel von Hohlfasern, die am Ende jeweils in eine kompakte Vergussmasse eingebettet sind, wobei als Vergussmasse ein kompaktes Polyurethan verwendet wird, erhältlich durch Umsetzung von
a) Polyisocyanatprepolymeren, die erhältlich sind durch Umsetzen von
i) Polyisocyanaten und
ii) gegebenenfalls Bis-[isocyanatodiphenylmethan]-carbodümid mit
iii) einem Gemisch aus mindestens zwei Polyetherpolyolen (iii-a und iii-b) mit einem zahlenmittleren Molekulargewicht von mindestens 300 g/mol,
wobei die mindestens zwei Polyetherpolyole durch Alkoxylierung eines difunktionellen Startermoleküls erhältlich sind und eine Differenz von mindestens 150 g/mol im zahlenmittleren Molekulargewicht aufweisen, und
b) Polyolen.

2. Dialysefilter nach Anspruch 1, **dadurch gekennzeichnet, dass** das Polyisocyanatprepolymer einen NCO-Gehalt von 15 bis 25 % aufweist.

3. Dialysefilter nach Anspruch 1 oder 2, **dadurch gekennzeichnet, dass** es sich bei den Bestandteil (iii-a) um ein Polypropylenglykol mit einem zahlenmittleren Molekulargewicht von 800 bis 1200 g/mol und bei den Bestandteil (iii-b) um ein Polypropylen-glykol mit einem zahlenmittleren Molekulargewicht von 300 bis 600 g/mol handelt.

4. Dialysefilter nach einem der Ansprüche 1 bis 3, **dadurch gekennzeichnet, dass** der Umsetzung zum Polyisocyanatprepolymeren
40 Gew.-% bis 70 Gew.-% an Bestandteil (i),
0,05 Gew.-% bis 5 Gew.-% an Bestandteil (ii) und
30 Gew.-% bis 60 Gew.-% an Bestandteil (iii),
bezogen auf das Gesamtgewicht der Komponenten (i), (ii) und (iii), zugegeben werden.

5. Dialysefilter nach Anspruch 4, **dadurch gekennzeichnet, dass** das Gewichtsverhältnis der Bestanteile (i) zu (ii) zu (iii-a) zu (iii-b) Werte von 180 ± 20 zu 1 ± 0,8 zu 50 ± 10 zu 20 ± 5 beträgt.

6. Verwendung eines Polyisocyanatprepolymers nach einem der Ansprüche 1 bis 5 zum Verguss von Dialysefiltern.

## Claims

1. A dialysis filter composed of a bundle of hollow fibers, the end of each of which has been embedded into a compact embedding composition, where the embedding composition used comprises a compact polyurethane, obtainable via reaction of
a) polyisocyanate prepolymers, which are obtainable via reaction of
i) polyisocyanates and
ii) if appropriate bis[isocyanatodiphenylmeth ane]carbodiimide with
iii) a mixture composed of at least two poly ether polyols (iii-a and iii-b) with a num ber-average molar mass of at least 300 g/mol,
where the at least two polyether polyols are obtainable via alkoxylation of a difunctional starter molecule and have a difference of at least 150 g/mol in number-average molar mass, and
b) polyols.

2. The dialysis filter according to claim 1, wherein the polyisocyanate prepolymer has an NCO content of from 15 to 25%.

3. The dialysis filter according to claim 1 or 2, wherein component (iii-a) comprises a polypropylene glycol with a number-average molar mass of from 800 to 1200 g/mol, and constituent (iii-b) comprises a polypropylene glycol with a number-average molar mass of from 300 to 600 g/mol.

4. The dialysis filter according to any of claims 1 to 3, wherein
from 40 to 70% by weight of constituent (i),
from 0.05 to 5% by weight of constituent (ii) and
from 30 to 60% by weight of constituent (iii),
based on the total weight of components (i), (ii) and (iii), are added to the reaction to give the polyisocyanate prepolymer.

5. The dialysis filter according to claim 4, wherein the ratio by weight of the constituents (i):(ii):(iii-a): (iii-b) is 180 ± 20:1 ± 0.8:50 ± 10:20 ± 5.

6. The use of a polyisocyanate prepolymer according to any of claims 1 to 5 for the embedding of dialysis filters.

## Revendications

1. Filtre à dialyse constitué d'un faisceau de fibres creuses incorporées à l'extrémité chaque fois dans une masse de remplissage compacte, où l'on emploie comme masse de remplissage un polyuréthanne compact, qu'on obtient par réaction de :
a) prépolymères de polyisocyanate qu'on obtient par réaction de :
i) polyisocyanates et
ii) éventuellement de bis-[isocyanatodiphénylméthane]carbodiimide avec
iii) un mélange d'au moins deux polyétherpolyols (iii-a et iii-b) d'un poids moléculaire moyen en nombres d'au moins 300 g/mole,
dans lequel les au moins deux polyétherpolyols sont obtenus par alcoxylation d'une molécule initiale difonctionnelle et présentent une différence d'au moins 150 g/mole en poids moléculaire moyen en nombres, et
b) de polyols.

2. Filtre à dialyse selon la revendication 1, **caractérisé en ce que** le prépolymère de polyisocyanate présente une teneur en NCO de 15 à 25 %.

3. Filtre à dialyse selon la revendication 1 ou 2, **caractérisé en ce que** pour le constituant (iii-a), il s'agit d'un polypropylèneglycol d'un poids moléculaire moyen en nombres de 800 à 1200 g/mole et pour le constituant (iii-b), d'un polypropylèneglycol d'un poids moléculaire moyen en nombres de 300 à 600 g/mole.

4. Filtre à dialyse selon l'une des revendications 1 à 3, **caractérisé en ce qu'**on ajoute à la réaction d'obtention du prépolymère de polyisocyanate :
40 % en poids à 70 % en poids du constituant (i),
0,05 % en poids à 5 % en poids du constituant (ii), et
30 % en poids à 60 % en poids du constituant (iii),
sur base du poids total des composants (i), (ii) et (iii).

5. Filtre à dialyse selon la revendication 4, **caractérisé en ce que** le rapport pondéral des constituants (i) à (ii) à (iii-a) à (iii-b) est des valeurs de 180 ± 20 à 1 ± 0,8 à 50 ± 10 à 20 ± 5.

6. Utilisation d'un prépolymère de polyisocyanate selon l'une des revendications 1 à 5 pour le remplissage de filtres à dialyse.
